# EUROPEAN PATENT APPLICATION

(11) **EP 4 556 445 A1**
(43) Date of publication of application: **21.05.2025**
(21) Application number: 24214271.9
(22) Date of filing: 20.11.2024
(51) Int. Cl.: C01G 53/42, H01M 4/525, H01M 10/0525

(54) **POSITIVE ELECTRODE ACTIVE MATERIALS, PREPARATION METHODS THEREOF, POSITIVE ELECTRODES, AND RECHARGEABLE LITHIUM BATTERIES**

(30) Priority: 20.11.2023 KR 20230161469
(71) Applicant: SAMSUNG SDI CO., LTD., Yongin-si, Gyeonggi-do 17084 (KR)
(72) Inventor: CHOI, Seungyeon, 17084 Yongin-si (KR); KIM, Soohyeon, 17084 Yongin-si (KR); SHIN, Dongwook, 17084 Yongin-si (KR); HONG, Soonkie, 17084 Yongin-si (KR); CHOI, Aram, 17084 Yongin-si (KR); HA, Jeuk, 17084 Yongin-si (KR); CHA, Minah, 17084 Yongin-si (KR); KIM, Minhan, 17084 Yongin-si (KR)
(74) Representative: Marks & Clerk LLP

(57) **Abstract**

A positive electrode active material includes a layered lithium nickel-based composite oxide, wherein, based on 100 mol% of a total mole of metals of the layered lithium nickel-based composite oxide excluding lithium, a nickel content is greater than or equal to about 60 mol%, an aluminium content is about 0.8 mol% to about 1.5 mol%, a zirconium content is about 0.1 mol% to about 0.3 mol%, a ratio of the aluminium content relative to the zirconium content (AI/Zr) is greater than or equal to about 5, and the positive electrode active material is in a form of a single particle with an average particle diameter (D₅₀) of about 1 µm to about 4 µm. Also disclosed are a positive electrode comprising a positive electrode current collector having a layer of said positive electrode active material located thereon, and a rechargeable lithium battery comprising said positive electrode, a negative electrode and an electrolyte. Further disclosed is a method of preparing the positive electrode active material.

## Description

### BACKGROUND

### 1. Field

One or more embodiments of the present disclosure relate to positive electrode active materials, preparation methods thereof, positive electrodes including the positive electrode active materials, and rechargeable lithium batteries including the positive electrodes.

### 2. Description of the Related Art

In a portable information device such as a cell phone, a laptop, a smart phone, and/or the like, and/or an electric vehicle, it is known to use a rechargeable lithium battery having relatively high energy density and easy portability as a driving power source. Recently, research has been conducted to utilize a rechargeable lithium battery with high energy density as a driving power source for hybrid or electric vehicles and/or a power storage power source for a home power storage unit, e.g., an electric energy storage unit or a power wall.

Various positive electrode active materials have been investigated to realize rechargeable lithium batteries for applications to the above uses. Among them, lithium nickel-based oxide, lithium nickel manganese cobalt composite oxide, lithium nickel cobalt aluminium composite oxide, and lithium cobalt oxide are predominantly or mainly used as positive electrode active materials. In recent years, high nickel-based positive electrode active materials having a nickel content (e.g., amount) of about 80 mol% or more have been actively developed due to their potential (capability of achieving) high energy density, but they have various problems or challenges such as structural deterioration according to charges and discharges, surface side reactions with an electrolyte, deterioration according to particle cracking, and/or the like. Accordingly, there is still a need or requirement for the development of positive electrode active materials capable of exhibiting both high energy density and long cycle-life characteristics.

For the high nickel-based positive electrode active materials having relatively high capacity, secondary particles (e.g., each) made by agglomerating a plurality of primary particles have been predominantly or mainly used. Recently, in order to realize a long cycle-life at the same time as reducing gas generation, single particles have been reviewed or studied. However, because the single particles are manufactured by increasing a firing temperature, there are problems of increasing the agglomeration of the particles and deteriorating producibility. In order to prevent or reduce the agglomeration of the single particles and lower the firing temperature, research on adding an alkaline grain growth accelerator during synthesis of the single particles has been proposed, but this has a problem that the grain growth accelerator may remain after the firing and act as resistance in the positive electrode, resultantly deteriorating the cycle-life of a rechargeable lithium battery utilizing such high nickel-based positive electrode active materials. Furthermore, a washing process for removing the residual grain growth accelerator or residual salts may be introduced, but that brings about another problem of increasing the manufacturing cost and/or complicating the process.

### SUMMARY

One or more aspects of the present disclosure are directed toward a method for effectively preparing a high-nickel-based positive electrode active material in a form of a single particle at a relatively low firing temperature without utilizing an alkaline grain growth accelerator, and for reducing aggregation between single particles, thereby making the overall preparing process simple and economical. Accordingly, provided is a positive electrode active material that is structurally stable and has no residual impurities (which might otherwise increase resistance), and exhibits a long cycle-life.

In one or more embodiments, a positive electrode active material includes a layered lithium nickel-based composite oxide, wherein, based on 100 mol% of a total mole of metals of the layered lithium nickel-based composite oxide excluding lithium, a nickel content (e.g., amount) is greater than or equal to about 60 mol%, an aluminium content (e.g., amount) is about 0.8 mol% to about 1.5 mol%, and a zirconium content (e.g., amount) is about 0.1 mol% to about 0.3 mol%, a ratio (Al/Zr) of the aluminium content (e.g., amount) relative to the zirconium content (e.g., amount) is greater than or equal to about 5, and the positive electrode active material is in the form of a single particle (e.g., one or more single particles or one or more monolithic particles) with an average particle diameter (D₅₀) of about 1 µm to about 4 µm.

In one or more embodiments, a method of preparing a positive electrode active material includes performing a co-precipitation reaction of a nickel precursor and an M¹ precursor to prepare a nickel-based composite hydroxide being in a form of particles and having micropores inside the particles, mixing the nickel-based composite hydroxide, a lithium raw material, an aluminium raw material, and a zirconium raw material and performing a heat treatment to prepare hollow secondary particles including layered lithium nickel-based composite oxide and having pores inside as secondary particles made by agglomerating a plurality of primary particles, pulverizing the secondary particles, and obtaining a positive electrode active material, where M¹ is one or more elements selected from among boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), and zinc (Zn), based on 100 mol% of a total mole of metals of the nickel-based composite hydroxide, aluminium of the aluminium raw material, and zirconium of the zirconium raw material, an aluminium content (e.g., amount) of the aluminium raw material is about 0.8 mol% to about 1.5 mol% and a zirconium content (e.g., amount) of the zirconium raw material is about 0.1 mol% to about 0.3 mol%, and a ratio (Al/Zr) of the aluminium content (e.g., amount) relative to the zirconium content (e.g., amount) is greater than or equal to about 5.

Some embodiments provide a positive electrode for a rechargeable lithium battery including the aforementioned positive electrode active material.

Some embodiments provide a rechargeable lithium battery including the positive electrode, a negative electrode, and an electrolyte.

According to one or more embodiments, the high nickel-based positive electrode active material in the form of a single particle may be synthesized in a simple way at a relatively low heat treatment temperature, and because no alkaline grain growth accelerator is utilized during the synthesis process, no residue is left and resistance does not increase, the positive electrode active material is structurally stable, and a long cycle-life characteristics of a rechargeable lithium battery may be implemented. That is, the high-nickel-based positive electrode active material may be easily synthesized as single particles at relatively low temperatures without using an alkaline grain growth accelerator. This should result in no residue, decreased resistance, structural stability, and enhances the rechargeable lithium battery's longterm cycle life.

At least some of the above and other features of the invention are set out in the claims.

### BRIEF DESCRIPTION OF THE DRAWINGS

FIGS. 1 to 4 are schematic diagrams each showing a rechargeable lithium battery according to one or more embodiments.
FIG. 5 is a scanning electron microscope (SEM) image of the surface of the positive electrode active material in the form of secondary particles before pulverization, prepared in Example 1.
FIG. 6 is an SEM image of the surface of the positive electrode active material in the form of single particles after pulverization, prepared in Example 1.
FIG. 7 is an SEM image of the surface of the positive electrode active material in the form of secondary particles before pulverization, prepared in Example 2.
FIG. 8 is an SEM image of the surface of the positive electrode active material in the form of single particles after pulverization, prepared in Example 2.
FIG. 9 is an SEM image of the surface of the positive electrode active material in the form of secondary particles before pulverization, prepared in Comparative Example 1.
FIG. 10 is an SEM image of the surface of the positive electrode active material in the form of secondary particles before pulverization, prepared in Comparative Example 2.
FIG. 11 is an SEM image of the surface of the positive electrode active material in the form of secondary particles before pulverization, prepared in Example 3.
FIG. 12 is an SEM image of the surface of the positive electrode active material in the form of secondary particles before pulverization, prepared in Example 4.
FIG. 13 is an SEM image of the surface of the positive electrode active material in the form of secondary particles before pulverization, prepared in Comparative Example 3.
FIG. 14 is an SEM image of the surface of the positive electrode active material in the form of secondary particles before pulverization, prepared in Example 5.
FIG. 15 is an SEM image of the surface of the positive electrode active material in the form of secondary particles before pulverization, prepared in Example 6.
FIG. 16 is an SEM image of the surface of the positive electrode active material in the form of secondary particles before pulverization, prepared in Comparative Example 4.
FIG. 17 is a graph showing cycle-life characteristics of rechargeable lithium battery cells manufactured in Example 1, Example 2, and Comparative Example 1.

### DETAILED DESCRIPTION

Hereinafter, example embodiments will be described in more detail so that those of ordinary skill in the art may easily implement them. However, the present disclosure may be embodied in many different forms and is not construed as limited to the example embodiments set forth herein.

The terminology utilized herein is utilized to describe embodiments only, and is not intended to limit the present disclosure. As used herein, the singular forms "a," "an," and "the" are intended to include the plural forms as well unless the context clearly dictates otherwise. Further, the utilization of "may" when describing embodiments of the present disclosure refers to "one or more embodiments of the present disclosure".

As utilized herein, "combination thereof" may refer to a mixture, a laminate, a composite, a copolymer, an alloy, a blend, a reaction product, and/or the like of the constituents.

Herein, it should be understood that terms such as "comprise(s)/comprising," "include(s)/including," or "have(has)/having" are intended to designate the presence of an embodied feature, number, operation (e.g., act or task), element, and/or a (e.g., any suitable) combination thereof, but it does not preclude the possibility of the presence or addition of one or more other features, numbers, operations, elements, and/or a (e.g., any suitable) combination thereof.

In the drawings, the thickness of layers, films, panels, regions, and/or the like. are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it may be directly on the other element or intervening elements may also be present. In contrast, if (e.g., when) an element is referred to as being "directly on" another element, there are no intervening elements present.

In one or more embodiments, the term "layer" as utilized herein may include not only a shape or a layer formed on the whole surface if (e.g., when) viewed from a plan view, but also a shape or a layer formed on a partial surface.

In one or more embodiments, an average particle diameter may be measured by a method well suitable to those skilled in the art, for example, by a particle size analyzer, for example, an HORIBA LA-950 Laser Scattering Particle Size Distribution Analyzer, or by a Transmission Electron Microscope (TEM) or a Scanning Electron Microscope (SEM). In one or more embodiments, it may be possible to obtain an average particle diameter value by measuring utilizing a dynamic light scattering method, performing data analysis, counting the number of particles for each particle size range, and calculating from the data. Unless otherwise defined, the average particle diameter may refer to the diameter (D₅₀) of particles having a cumulative volume of 50 volume% in the particle size distribution. D₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates an average particle diameter, and when the particles are non-spherical, the "diameter" indicates a major axis length. As utilized herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and/or the like. Further, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As utilized herein, the term "metal" is interpreted as a concept including ordinary metals, transition metals and metalloids (semi-metals).

### Positive Electrode Active Material

In one or more embodiments, a positive electrode active material includes a layered lithium nickel-based composite oxide. Based on 100 mol% of a total mole of metals included in the layered lithium nickel-based composite oxide excluding lithium, a nickel content (e.g., amount) is greater than or equal to about 60 mol%, an aluminium content (e.g., amount) is about 0.8 mol% to about 1.5 mol%, and a zirconium content (e.g., amount) is about 0.1 mol% to about 0.3 mol%, and a ratio of the aluminium content (e.g., amount) relative to the zirconium content (e.g., amount) (Al/Zr) is greater than or equal to about 5, and the positive electrode active material is in a form of a single particle with an average particle diameter (D₅₀) of about 1 µm to about 4 µm. In other words, the composition of the positive electrode active material may include the layered or stratified lithium nickel-based composite oxide. Based on the entire metal content of the layered lithium nickel-based composite oxide, excluding lithium, the proportions are as follows: nickel content of greater than or equal to about 60 mol%, aluminium content of from about 0.8 mol% to about 1.5 mol%, and zirconium content of from about 0.1 mol% to about 0.3 mol%. Furthermore, the aluminium to zirconium ratio (Al/Zr) is at least about 5. Here, the positive electrode active material presents itself as single particles, with the average or median particle diameter (D₅₀) measuring between about 1 µm and about 4 µm. In the present disclosure, "not include a or any 'component'" "exclude a or any 'component'", "'component'-free", and/or the like refers to that the 'component' not being added, selected or utilized as a component in the composition/element/structure, but, in some embodiments, the 'component' of less than a suitable amount may still be present/included due to other impurities and/or external factors.

The positive electrode active material may be effectively synthesized even through relatively low-temperature heat treatment, making it economical and advantageous for mass production, and has high structural stability, enabling excellent or suitable cycle-life characteristics.

Herein, the single particles may (e.g., each) exist alone without a grain boundary within the particle, and each may be composed of one particle, e.g., that may be a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal. The single particles may exist alone, or single particles may be agglomerated together. For example, 2 to 9 single particles may be agglomerated and in contact with each other.

In one or more embodiments, a single particle may exist alone, or five or fewer single particles may be attached to each other, e.g., agglomerated.

In one or more embodiments, the average particle diameter (D₅₀) of a single particle (e.g., representing the point at which half the single particles are smaller and half are larger) may be about 1 µm to about 4 µm, for example, about 1.5 µm to about 4 µm, about 2 µm to about 4 µm, or about 2 µm to about 3.8 µm. The single particles satisfying the above particle size range are structurally stable, may increase the energy density of the positive electrode, and may improve the long cycle-life characteristics of rechargeable lithium batteries. Herein, the average particle diameter is obtained by measuring the size of 20 random particles (particle diameter, major diameter, or major axis length) in a scanning electron microscope image, for example, to obtain the particle size distribution, and calculating the size (D₅₀) of the particle with a cumulative volume of 50 volume% in the particle size distribution.

The layered lithium nickel-based composite oxide is a high nickel-based oxide having a nickel content (e.g., amount) of greater than or equal to about 60 mol% based on 100 mol% of a total mole of metals excluding lithium. The nickel content (e.g., amount) of the layered lithium nickel-based composite oxide may be, for example, greater than or equal to about 65 mol%, greater than or equal to about 70 mol%, greater than or equal to about 75 mol%, greater than or equal to about 80 mol%, greater than or equal to about 85 mol%, greater than or equal to about 90 mol%, greater than or equal to about 91 mol%, or greater than or equal to about 94 mol% and less than or equal to about 99 mol% or less than or equal to about 98 mol%, based on the 100 mol% of the total mole of the metals excluding lithium.

The layered lithium nickel-based composite oxide contains a certain amount of aluminium and zirconium as a type or kind of dopant in addition to nickel. The aluminium content (e.g., amount) is about 0.8 mol% to about 1.5 mol%, for example, about 0.8 mol% to about 1.4 mol%, about 0.8 mol% to about 1.3 mol%, or about 0.9 mol% to about 1.2 mol based on the 100 mol% of the total mole of the metals of the layered lithium nickel-based composite oxide excluding lithium. The zirconium content (e.g., amount) is about 0.1 mol% to about 0.3 mol%, for example, about 0.1 mol% to about 0.2 mol%, based on the 100 mol% of the total mole of the metals of the layered lithium nickel-based composite oxide excluding lithium.

In addition, the layered lithium nickel-based composite oxide has a ratio of aluminium content (e.g., amount) to zirconium content (e.g., amount) (Al/Zr) that is greater than or equal to about 5, for example, about 5 to about 20, about 5 to about 15, or about 5 to about 10. If the content (e.g., amount) ratio of aluminium to zirconium satisfies the above range, it is possible to synthesize at a relatively low firing temperature without utilizing, for example, an alkaline grain growth additive during the synthesis process, and long cycle-life characteristics may be achieved due to high structural stability.

As a specific example, the layered lithium nickel-based composite oxide may be represented by Chemical Formula 1.

[Chemical Formula 1] Liₐ₁Niₓ₁M¹_{y1}Al_{z1}Zr_{w1}O_{2-b1}X_{b1}

In Chemical Formula 1, 0.9≤a1≤1.2, 0.6≤x1≤0.991, 0≤y1≤0.391, 0.008≤z1 ≤0.015, 0.001≤w1≤0.003, 0.9≤x1+y1+z1+w1≤1.1, and 0≤b1≤0.1, M¹ may be one or more elements of (e.g., selected from among) boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), and zinc (Zn), and X may be one or more elements of (e.g., selected from among) fluorine (F), phosphorous (P), and sulfur (S).

In Chemical Formula 1, a1 representing the Li content may be 0.9≤a1≤1.1, 0.9≤a1≤1.05, or 0.9≤a1 ≤1. Additionally or alternatively, each of x1 and y1 representing the Ni and M¹ contents respectively, may be 0.7≤x1≤0.991 and 0≤y1≤ 0.291, 0.8≤x1≤0.991 and 0≤y1≤0.191, or 0.9≤x1≤0.991, and 0≤y1≤0.091. z1, representing the Al content (e.g., amount) may be, for example, 0.008≤z1≤0.014, 0.008≤z1≤0.013, or 0.009≤z1≤0.012. w1, which represents the Zr content (e.g., amount), may be, for example, 0.001 ≤w1≤0.002.

In Chemical Formula 1, the following ratio of the aluminium content (represented by z1) to the zirconium content (represented by w1) is satisfied: 5≤z1/w1. The ratio may be, for example, 5≤z1/w1≤20, 5≤z1/w1≤15, or 5≤z1/w1≤10.

As a more specific example, the layered lithium nickel-based composite oxide may be represented by Chemical Formula 2.

[Chemical Formula 2] Liₐ₂Niₓ₂Coᵥ₂M²_{y2}Al_{z2}Zr_{w2}O_{2-b2}X_{b2}

In Chemical Formula 2, 0.9≤a2≤1.2, 0.6≤x2<0.991, 0<v2≤0.391, 0≤y2≤ 0.391, 0.008≤z2≤0.015, 0.001≤w2≤0.003, 0.9≤x2+v2+y2+z2+w2≤1.1, and 0≤b2≤0.1, M² may be one or more elements of (e.g., selected from among) B, Ba, Ca, Ce, Cr, Cu, Fe, Mg, Mn, Mo, Nb, Si, Sn, Sr, Ti, V, W, and Zn, and X may be one or more elements of (e.g., selected from among) F, P, and S.

In Chemical Formula 2, the ratio of the aluminium content (represented by z2) to the zirconium content (represented by w2) also satisfies 5≤z2/w2, for example, 5 ≤z2/w2≤20, 5≤z2/w2≤15, or 5≤z2/w2≤10.

### Method of Preparing Positive Electrode Active Material

In one or more embodiments, a method of preparing a positive electrode active material includes (i) performing a co-precipitation reaction of a nickel precursor and an M¹ precursor to prepare a nickel-based composite hydroxide in a form of particles and having micropores inside the particles, (ii) mixing the nickel-based composite hydroxide, a lithium raw material, an aluminium raw material, and a zirconium raw material and performing a heat treatment to prepare hollow secondary particles including layered lithium nickel-based composite oxide having pores inside, the secondary particles being an agglomeration of a plurality of primary particles, and (iii) pulverizing the secondary particles to obtain a positive electrode active material.

In the M¹ precursor, M¹ is one or more elements of (e.g., selected from among) B, Ba, Ca, Ce, Co, Cr, Cu, Fe, Mg, Mn, Mo, Nb, Si, Sn, Sr, Ti, V, W, and Zn. Based on 100 mol% of a total mole of metals of the nickel-based composite hydroxide, aluminum in the aluminum raw material, and zirconium in the zirconium raw material, aluminium of the aluminium raw material (e.g., an aluminium content (e.g., amount) of the aluminium raw material) is about 0.8 mol% to about 1.5 mol%, zirconium of the zirconium raw material (e.g., a zirconium content (e.g., amount) of the zirconium raw material) is about 0.1 mol% to about 0.3 mol%, and a ratio of the aluminium content (e.g., amount) relative to the zirconium content (e.g., amount) (Al/Zr) is greater than or equal to about 5.

According to the one or more embodiments of the present disclosure, it is possible to effectively prepare a high nickel-based positive electrode active material in the form of single particles utilizing a relatively low sintering temperature and a simple method without adding an alkaline grain growth accelerator or flux, thereby improving productivity and economic efficiency.

In one or more embodiments, the above method may be performed by mixing the nickel-based composite hydroxide and a lithium raw material and performing heat treatment, and then adding the aluminium raw material and the zirconium raw material together and firing them. At this time, it is understood that the aluminium raw material and zirconium raw material act as a dopant and at the same time (e.g., concurrently) act as a grain growth accelerator. For example, when the aluminium raw materials and zirconium raw materials are added, particle growth is promoted, making it possible to effectively synthesize single particles at a lower temperature compared to existing single particle synthesis methods and as a result, an agglomeration of particles is suppressed or reduced, and the productivity of the high nickel-based positive electrode active material is improved. In comparison, existing alkaline grain growth accelerator or flux has a problem of remaining after firing and acting as resistance within the positive electrode, thereby reducing the cycle-life of the existing positive electrode. However, aluminium raw materials and zirconium raw materials of the present disclosure are used as dopants for the positive electrode active material and do not remain on the surface of the positive electrode active material particles, and thus the cycle-life characteristics of the positive electrode including the positive electrode active material particles of the present disclosure may be improved. That is, in one or more embodiment of the present disclosure, aluminium and zirconium raw materials serve dual roles as dopants and grain growth accelerators, enhancing particle synthesis at lower temperatures, reducing agglomeration, and boosting productivity of high nickel-based positive electrode materials. Unlike traditional alkaline accelerators that degrade cycle-life by remaining post-firing, these materials one or more embodiment of the present disclosure should not remain on the electrode surface, thus improving the electrode's cycle-life.

Hereinafter, a method of preparing a positive electrode active material will be described in more detail.

The nickel-based composite hydroxide is a precursor of the positive electrode active material, and is synthesized through a co-precipitation reaction. In the co-precipitation reaction, the nickel precursor may be a hydroxide, oxide, nitrate, sulfate, carbonate, and/or a (e.g., any suitable) combination thereof of nickel. The M¹ precursor may be a hydroxide, oxide, nitrate, sulfate, carbonate, and/or a (e.g., any suitable) combination thereof containing the M¹ element.

In the co-precipitation reaction, a complexing agent and a pH controlling agent may be utilized in addition to the nickel precursor and M¹ precursor. The complexing agent plays a role in controlling a reaction rate of precipitate formation in the co-precipitation reaction, and may include, for example, ammonium hydroxide (NH₄OH), citric acid, and/or a (e.g., any suitable) combination thereof. A concentration of complexing agent may be about 0.1 to about 1.5 M, for example about 0.1 to about 1.4 M, or about 0.5 to about 1.4 M. The pH controlling agent serves to control the pH of the reactant and may include, for example, sodium hydroxide (NaOH), sodium carbonate (Na₂CO₃), sodium oxalate (Na₂C₂O₄), and/or a (e.g., any suitable) combination thereof.

The co-precipitation reaction may include a first step (e.g., act or task) reacting at a pH range of about 11 to about 12 and a second step (e.g., act or task) reacting at a pH lower than the first step (e.g., act or task). The pH of the first step (e.g., act or task) may be, for example, about 11.5 to about 12, about 11.6 to about 11.9, or about 11.7 to about 11.8, and may be considered a kind of pore shaping step (e.g., act or task). The second step (e.g., act or task) may be a step (e.g., act or task) of reaction at a pH lower than that of the first step (e.g., act or task), and may be a type or kind of particle growth step (e.g., act or task). By changing the pH in two or more steps, a synthesis rate may be changed, and as a result, a nickel-based composite hydroxide with micropores inside the particles may be obtained. The pH of the second step (e.g., act or task) may be, for example, about 10 to about 11.9, about 10.5 to about 11.7, about 11 to about 11.7, about 11.2 to about 11.6, or about 11.3 to about 11.6. A difference between the pH of the first step (e.g., act or task) and the pH of the second step (e.g., act or task) may be, for example, about 0.1 to about 1.5, for example about 0.1 to about 1.0, about 0.1 to about 0.8, about 0.1 to about 0.6, about 0.1 to about 0.5, about 0.1 to about 0.3, or about 0.1 to about 0.2.

The first step (e.g., act or task) may proceed for about 6 to about 12 hours, or about 8 to about 10 hours. The second step (e.g., act or task) may proceed for about 10 to about 30 hours, about 15 to about 25 hours, or about 18 to about 24 hours.

The prepared nickel-based composite hydroxide may be represented by Chemical Formula 11.

[Chemical Formula 11] Niₓ₁₁M¹_{y11}(OH)₂

In Chemical Formula 11, 0.6≤x11≤1, 0≤y11≤0.4, and 0.9≤x11+y11≤1.1, and M¹ may be one or more elements of (e.g., selected from among) B, Ba, Ca, Ce, Co, Cr, Cu, Fe, Mg, Mn, Mo, Nb, Si, Sn, Sr, Ti, V, W, and Zn.

In Chemical Formula 11, the following may apply: 0.7≤x11≤1 and 0≤y11≤ 0.3, 0.8≤x11≤1 and 0≤y11≤0.2, or 0.9≤x11<1 and 0<y11≤0.1.

As a specific example, the nickel-based composite hydroxide may be represented by Chemical Formula 12.

[Chemical Formula 12] Niₓ₁₂Coᵥ₁₂M²_{y12}(OH)₂

In Chemical Formula 12, 0.6≤x12<1, 0<v12≤0.4, 0≤y1≤0.4, and 0.9≤ x12+v12+y12≤1.1, and M² may be one or more elements of (e.g., selected from among) B, Ba, Ca, Ce, Cr, Cu, Fe, Mg, Mn, Mo, Nb, Si, Sn, Sr, Ti, V, W, and Zn.

In one or more embodiments, the nickel-based composite hydroxide may be in the form of particles. For example, the particles of the nickel-based composite hydroxide may include an inner portion including a plurality of micropores and an outer portion that surrounds the inner portion and has a dense structure. Herein, the inner portion of the nickel-based composite hydroxide particle may refer to an area of 50 to 70 volume%, for example 60 volume% of the total volume, from the center of the particle, or may refer to a remaining area excluding the outer portion, which may be an area within 3 µm from the outermost edge to the center of the particle, of the total distance from the center of the particle to the surface of the particle.

In this way, by utilizing a nickel-based composite hydroxide having micropores inside the particles, a positive electrode active material in the form of hollow secondary particles (e.g., a hollow secondary particle) may be effectively obtained. In this case, the secondary particles may be easily pulverized during the pulverizing process to obtain good or suitable single particles.

For example, the nickel-based composite hydroxide may be amorphous (non-crystalline), which may be confirmed through X-ray diffraction analysis.

In step (e.g., act or task) (ii) of the method for preparing the positive electrode active material above, a lithium content (e.g., amount) of the lithium raw material may be about 0.9 parts by mole to about 1.2 parts by mole, for example about 0.9 parts by mole to about 1.1 parts by mole, or about 0.9 parts by mole to about 1.05 parts by mole, for example greater than about 1 part by mole and less than about 1.1 parts by mole, for example about 1.01 parts by mole to about 1.04 parts by mole, based on the total of 1 part by mole of the total metal of the nickel-based composite hydroxide, aluminium of the aluminium raw material, and zirconium of the zirconium raw material. By appropriately or suitably controlling the molar ratio of lithium raw material, a single particle-shaped positive active material with a stable structure and good or suitable quality may be prepared.

The lithium raw material may be, for example, lithium hydroxide, lithium carbonate, lithium sulfate, lithium nitrate, and/or a (e.g., any suitable) combination thereof, for example, anhydrous lithium hydroxide.

The aluminium content (e.g., amount) of the aluminium raw material is designed to be about 0.8 mol% to about 1.5 mol%, and the zirconium content (e.g., amount) of the zirconium raw material is designed to be about 0.1 mol% to about 0.3 mol% based on 100 mol% of a total mole of metals of the nickel-based composite hydroxide, aluminium of the aluminium raw material, and zirconium of the zirconium raw material. The aluminium content (e.g., amount) of the aluminium raw material may be, for example, about 0.8 mol% to about 1.4 mol%, about 0.8 mol% to about 1.3 mol%, or about 0.9 mol% to about 1.2 mol%. The zirconium content (e.g., amount) of the zirconium raw material may be, for example, about 0.1 mol% to about 0.2 mol%.

At the same time, the ratio of aluminium content (e.g., amount) to zirconium content (e.g., amount) (Al/Zr) is designed to be 5 or more, and may be, for example, about 5 to about 20, about 5 to about 15, or about 5 to about 10.

As described above, the aluminium raw material and the zirconium raw material are understood to act as raw materials of a dopant and concurrently (e.g., simultaneously), serve as a grain growth accelerator, where the aluminium raw material and zirconium raw material are respectively injected with the content (e.g., amount) ranges (for example, an amount of the aluminium raw material and an amount of the zirconium raw material) to obtain single particles in an optimal or suitable state.

The aluminium raw material may be, for example, aluminium oxide and specifically, Al₂O₃. In addition, the zirconium raw material may be, for example, zirconium oxide and specifically, ZrO₂.

In one or more embodiments, the heat treatment step of the method of preparing a positive electrode active material may be performed at a relatively lower temperature than existing single particles synthesis methods. For example, even if the heat treatment is performed at a relatively lower temperature, a desired or suitable positive electrode active material in good or suitable form of single particle may be obtained. Accordingly, the method may simplify the process, improve economic efficiency, reduce the particle agglomeration problem, and thereby, improving productivity and processability. The heat treatment may be performed, for example, at less than or equal to about 900 °C, or less than or equal to about 890 °C, less than or equal to about 850 °C, or less than or equal to about 810 °C, for example, about 700 °C to about 900 °C, 710 °C to about 890 °C, about 730 °C to about 850 °C, or about 750 °C to about 810 °C.

The heat treatment may be performed under an oxidizing gas atmosphere, for example, for about 4 hours to about 20 hours, about 5 hours to about 15 hours, or about 6 hours to about 12 hours.

In one or more embodiments, the method of preparing the positive electrode active material may not include addition of an alkaline grain growth accelerator or a flux in the process of mixing the nickel-based composite hydroxide, the lithium raw material, the aluminium raw material, and the zirconium raw material, and heat-treating them (e.g., a mixture of the nickel-based composite hydroxide, the lithium raw material, the aluminium raw material, and the zirconium raw material). Accordingly, an increase in resistance by a residue after the heat treatment that might otherwise occur is an alkaline grain growth accelerator or a flux were added, may be prevented or reduced, resultantly improving cycle-life characteristics of a rechargeable lithium battery, and because there is no need to add a process of removing the residue, the productivity and processability may be improved without the process of removing the residue.

Through the heat treatment, hollow secondary particles including layered lithium nickel-based composite oxide are obtained. Herein, the primary particles forming the secondary particles may sufficiently grow to single crystals by adding the aluminium raw material and the zirconium raw material. In addition, the secondary particles have a hollow structure with pores inside and thus may be easily pulverized in the subsequent pulverizing process.

In one or more embodiments, the average particle diameter (D₅₀) of the obtained secondary particles may be about 10 µm to about 20 µm, for example, about 10 µm to about 18 µm, or about 12 µm to about 16 µm. In one or more embodiments, the average particle diameter (D₅₀) of secondary particles may be measured through SEM images, as described earlier in this specification.

In one or more embodiments, the average particle diameter (D₅₀) of the primary particles constituting the secondary particles may be about 1 µm to about 4 µm, for example, about 1.5 µm to about 4 µm, about 2 µm to about 4 µm, or about 2 µm to about 3.8 µm. In one or more embodiments, the average particle diameter (D₅₀) of the primary particles may be measured through SEM images of the surfaces of the secondary particles, as described earlier in this specification.

In one or more embodiments, the size of the pores inside the secondary particles may be about 1 µm to about 9 µm, for example, about 2 µm to about 8 µm, about 3 µm to about 7 µm, and/or the like. In one or more embodiments, the size of the pores inside the secondary particle may be measured from an SEM image of the cross-section of the secondary particle, and may refer to a major axis length of the pore.

In one or more embodiments, the obtained layered lithium nickel-based composite oxide may be represented by Chemical Formula 1, and the description of Chemical Formula 1 is as described above.

In the step (e.g., act or task) (iii) of the method of preparing the positive electrode active material, pulverization of the secondary particles refers to breaking the secondary particles and may be understood as a process of separating the primary particles making up the secondary particles from each other into single particles. Through pulverization, the aforementioned high nickel-based positive electrode active material in the form of single particles with an average particle diameter (D₅₀) of about 1 µm to about 4 µm is obtained.

In the method of preparing a positive electrode active material, the nickel-based composite hydroxide with micropores inside is utilized as a precursor to obtain lithium nickel-based composite oxide in the form of hollow secondary particles after the heat treatment. Accordingly, the secondary particles may be easily pulverized into single particles. The nickel-based composite hydroxide is mixed with the lithium raw material and heat-treated together, along with the aluminium raw material and the zirconium raw material, to grow primary particles into single particles with a sufficient size at a relatively low temperature of about 900 °C or less, and thus obtain secondary particles in which the primary particles are agglomerated. The secondary particles are pulverized to obtain a desired or suitable single particle positive electrode active material in a good or suitable form.

In one or more embodiments, the pulverization may be carried out utilizing a jet mill or air flow classifying mill (ACM) equipment. If (e.g., when) the pulverization is performed with a jet mill, an air pressure may be appropriately or suitably adjusted, so that a pulverized product may have a volume density of about 0.2 g/cm³ to about 0.5 g/cm³, for example, under an air pressure of about 2 to about 8 bar, or about 4 to about 6 bar. In one or more embodiments, the pulverization process may be performed, for example, for about 10 minutes to about 120 minutes, for example, about 10 minutes to about 80 minutes, about 10 minutes to about 60 minutes, or about 20 minutes to about 50 minutes.

In one or more embodiments, the method of preparing the positive electrode active material may further include a reheat treatment after the pulverization. In one or more embodiments, the reheat treatment may be performed in an oxidizing gas atmosphere, for example, at about 500 °C to about 900 °C, or about 600 °C to about 800 °C, or about 650 °C to about 750 °C.

In one or more embodiments, the method of preparing the positive electrode active material may include pulverizing the product (e.g., the secondary particles) and mixing the pulverized product with a coating raw material, and then performing a reheat treatment step on the resultant mixture of pulverized product and coating raw material. Through this, it is possible to obtain single particles coated with the desired or suitable coating material.

In one or more embodiments, the coating raw material is not particularly limited to, and may be, for example, a raw material of one or more elements selected from among aluminium (Al), B, Co, Mg, V, Zn, and Zr, and may be hydroxides, oxides, sulfate, nitrate, or a carbonate containing the above elements.

In one or more embodiments, the positive electrode active material obtained through the above preparing method includes a lithium nickel-based composite oxide, and may include single particles with an average particle diameter (D₅₀) of about 1 µm to about 4 µm, and may include, for example, a mixture of non-pulverized hollow secondary particles and pulverized single particles.

### Positive Electrode

In one or more embodiments, a positive electrode for a rechargeable lithium battery containing the aforementioned positive electrode active material is provided. For example, the positive electrode includes a positive electrode current collector and a positive electrode active material layer on the positive electrode current collector, and the positive electrode active material layer includes the aforementioned positive electrode active material.

Herein, a positive electrode active material includes a layered lithium nickel-based composite oxide, where, based on the 100 mol% of the total mole of the metals of the layered lithium nickel-based composite oxide excluding lithium, a nickel content (e.g., amount) is greater than or equal to about 60 mol%, an aluminium content (e.g., amount) is about 0.8 mol% to about 1.5 mol%, and a zirconium content (e.g., amount) is about 0.1 mol% to about 0.3 mol%. Additionally, a ratio of the aluminium content (e.g., amount) relative to the zirconium content (e.g., amount) (Al/Zr) is greater than or equal to about 5. The positive electrode active material layer includes a positive electrode active material in a form of a single particle with an average particle diameter (D₅₀) of about 1 µm to about 4 µm.

For example, the positive electrode active material layer may include a first positive electrode active material in the form of single particles and a second positive electrode active material in the form of secondary particles. Herein, the second positive electrode active material may refer to hollow secondary particles that are not pulverized, and the first positive electrode active material may refer to single particles formed by pulverizing the second positive electrode active material.

In the positive electrode active material layer, the first positive electrode active material may be included at about 5 wt% to about 60 wt% based on 100 wt% of a total weight of the first positive electrode active material and the second positive electrode active material, and the second positive electrode active material may be included at about 40 wt% to about 95 wt% based on 100 wt% of a total weight of the first positive electrode active material and the second positive electrode active material. For example, a weight ratio of the first positive electrode active material and the second positive electrode active material may be about 5:95 to about 60:40, for example, about 10:90 to about 50:50, or about 20:80 to about 40:60, but is not particularly limited to.

In one or more embodiments, the positive active material layer may optionally further include a binder, a conductive material, and/or a (e.g., any suitable) combination thereof.

### Binder

The binder may improve binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

### Conductive Material

The conductive material (e.g., electron conductor) may be included to provide electrode conductivity, and any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; and/or a conductive polymer such as a polyphenylene derivative; and/or a (e.g., any suitable) mixture thereof.

Each content (e.g., amount) of the binder and the conductive material may be about 0.5 wt% to about 5 wt% based on 100 wt% of the positive electrode active material layer.

The positive electrode current collector may include aluminium, but the present disclosure is not limited thereto.

### Rechargeable Lithium Battery

Some embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

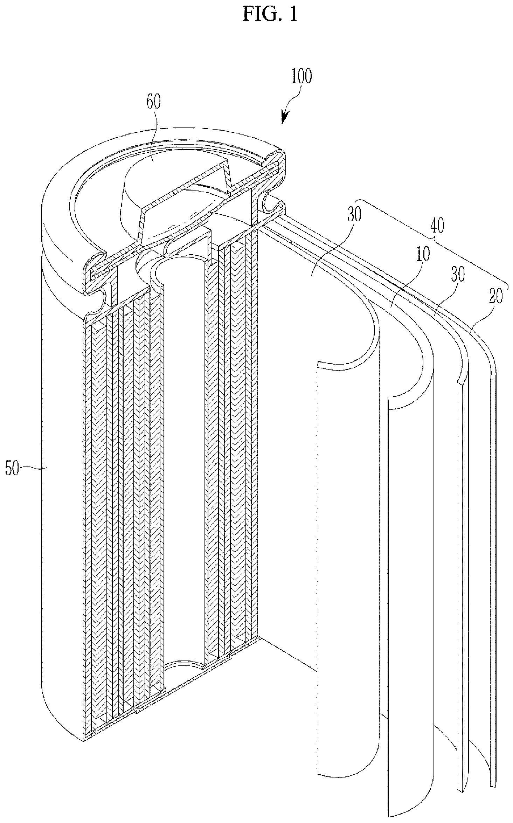

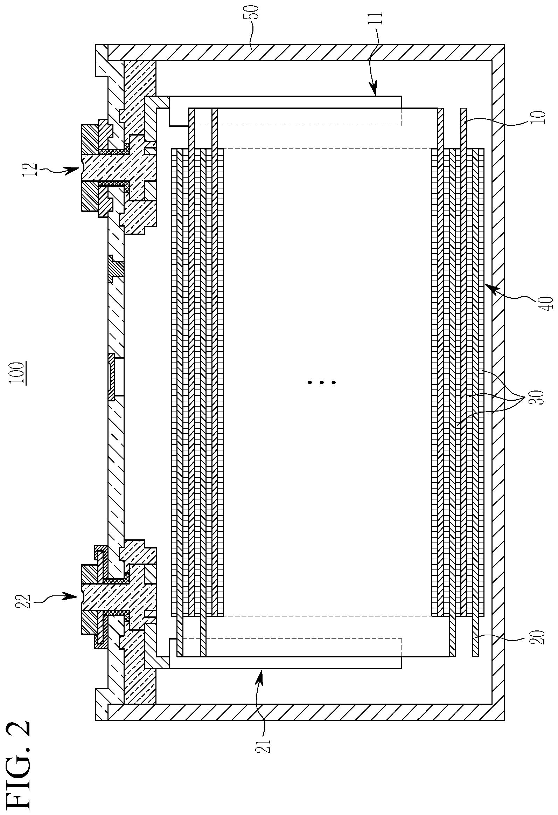

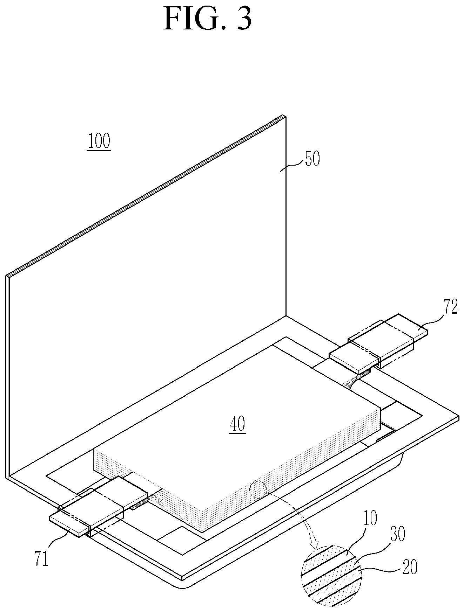

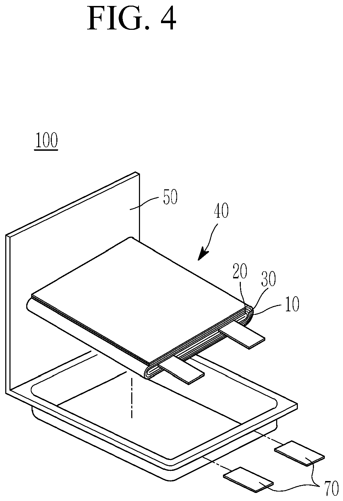

The rechargeable lithium battery may be classified into cylindrical, prismatic, pouch, coin, and/or the like, depending on the shape. In one or more embodiments, FIGS. 1 to 4 are schematic diagrams each showing a rechargeable lithium battery , where FIG. 1 is a cylindrical battery, FIG. 2 is a prismatic battery, and FIGS. 3 and 4 are each a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, for example, a positive electrode tab 71 and a negative electrode tab 72 serving as an electrical path for inducing the current formed in the electrode assembly 40 to the outside.

### Negative Electrode

The negative electrode may include a current collector and a negative electrode active material layer on the current collector, and the negative electrode active material layer may include a negative electrode active material, and may further include a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example crystalline carbon, amorphous carbon, and/or a (e.g., any suitable) combination thereof as a carbon-based negative electrode active material. The crystalline carbon may be irregular, sheet, flake, spherical, and/or fiber-shaped (e.g., in a form of fiber) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), Mg, Ca, Sr, Si, antimony (Sb), lead (Pb), indium (In), Zn, Ba, radium (Ra), germanium (Ge), Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (where Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, scandium (Sc), yttrium (Y), titanium (Ti), zirconium (Zr), hafnium (Hf), rutherfordium (Rf), V, Nb, tantalum (Ta), dubnium (Db), Cr, Mo, W, seaborgium (Sg), technetium (Tc), rhenium (Re), bohrium (Bh), iron (Fe), Pb, ruthenium (Ru), osmium (Os), hassium (Hs), rhodium (Rh), iridium (Ir), palladium (Pd), platinum (Pt), copper (Cu), sliver (Ag), gold (Au), zinc (Zn), cadmium (Cd), B, Al, gallium (Ga), Sn, In, thallium (Tl), Ge, P, arsenic (As), Sb, bismuth (Bi), S, selenium (Se), tellurium (Te), polonium (Po), and/or a (e.g., any suitable) combination thereof), and/or a (e.g., any suitable) combination thereof. The Sn-based negative electrode active material may be Sn, SnOₓ (0 < x ≤ 2), e.g., SnO₂, a Sn alloy, and/or a (e.g., any suitable) combination thereof.

The silicon-carbon composite may be a composite of silicon and amorphous carbon. An average particle diameter (D₅₀) of the silicon-carbon composite particles may be, for example, about 0.5 µm to about 20 µm. In one or more embodiments, the silicon-carbon composite may be in the form of silicon particles and amorphous carbon coated on the surface of the silicon particles. For example, it may include a secondary particle (core) in which silicon primary particles are assembled or agglomerated, and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and calcined coke.

In one or more embodiments, if (e.g., when) the silicon-carbon composite includes silicon and amorphous carbon, a silicon content (e.g., amount) may be about 10 wt% to about 50 wt% based on 100 wt% of the silicon-carbon composite, and a content (e.g., amount) of amorphous carbon may be about 50 wt% to about 90 wt% based on 100 wt% of the silicon-carbon composite. In addition, if (e.g., when) the composite includes silicon, amorphous carbon, and crystalline carbon, a silicon content (e.g., amount) may be about 10 wt% to about 50 wt% based on 100 wt% of the silicon-carbon composite, a content (e.g., amount) of crystalline carbon may be about 10 wt% to about 70 wt% based on 100 wt% of the silicon-carbon composite, and a content (e.g., amount) of amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0 < x ≤ 2). At this time, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where a cumulative volume is about 50 volume% in a particle distribution.

In one or more embodiments, the Si-based negative electrode active material or Sn-based negative electrode active material may be mixed with the carbon-based negative electrode active material. If (e.g, when) the Si-based negative electrode active material or Sn-based negative electrode active material and the carbon-based negative electrode active material are mixed and utilized, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

In one or more embodiments, the non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

In one or more embodiments, the aqueous binder may include a styrene-butadiene rubber, a (meth)acrylated styrene-butadiene rubber, a (meth)acrylonitrilebutadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

In one or more embodiments, if (e.g., when) an aqueous binder is utilized as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and utilized. The alkali metal may be sodium (Na), potassium (K), or lithium (Li).

In one or more embodiments, the dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material (e.g., electron conductor) is included to provide electrode conductivity, and any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, sheet, and/or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (where R is a C2 to C20 linear, branched, or cyclic hydrocarbon group, a double bond, an aromatic ring, or an ether group, and/or the like); amides such as dimethylformamide; dioxolanes such as 1,3-dioxolane, 1,4-dioxolane, and/or the like; and/or sulfolanes, and/or the like.

The non-aqueous organic solvent may be utilized alone or in a mixture of two or more types (kinds), and if (e.g., when) two or more types (kinds) are utilized in a mixture, a mixing ratio may be appropriately or suitably adjusted according to the desired or suitable battery performance, which is widely suitable to those working in the field.

In one or more embodiments, if (e.g., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, a carbonate-based solvent and an aromatic hydrocarbon-based organic solvent may be mixed and utilized in a volume ratio of about 1:1 to about 30:1.

In one or more embodiments, the electrolyte may further include vinylethylene carbonate, vinylene carbonate, and/or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and/or lithium bis(oxalato) borate (LiBOB).

A concentration of lithium salt may be within the range of about 0.1 M to about 2.0 M. In one or more embodiments, if (e.g., when) the concentration of lithium salt is within the above range, the electrolyte has appropriate or suitable ionic conductivity and viscosity, and thus excellent or suitable performance may be achieved and lithium ions may move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on a surface (e.g., one or both surfaces (e.g., opposite surfaces)) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON^{™}), and/or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and/or a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, and/or a coating layer including an organic material, and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail. However, the following examples are only examples of the present disclosure, and the present disclosure is not limited to the following examples.

### Example 1

### 1. Preparation of Positive Electrode Active Material

### (1) Preparation of Nickel-based Composite Hydroxide

Through the following co-precipitation method, particles of a nickel-based composite hydroxide, having micropores inside the particles, were prepared. First, nickel sulfate, cobalt sulfate, and manganese sulfate were dissolved to have a mole ratio of Ni:Co:Mn = 95:4:1 in a solvent of distilled water to prepare a metal raw material mixed solution. In addition, a diluted solution of ammonia water (NH₄OH) as a complexing agent and sodium hydroxide (NaOH) as a pH controlling agent were prepared. Herein, the ammonia water had a concentration of 10 wt%, and the sodium hydroxide had a concentration of 20 wt%. Subsequently, the metal raw material mixed solution, the ammonia water, and the sodium hydroxide were added to a reactor.

The mixture was stirred for 10 hours by setting a pH value inside the reactor at 11.75 (first step (e.g., act or task)) and then, stirred for 22 hours by lowering the pH value to 11.55 (second step (e.g., act or task)) to create a synthesis speed difference between inside and outside the particles, thereby synthesizing particles of the nickel-based composite hydroxide, with micropores inside the particles, in a slurry solution.

The slurry solution in the reactor was filtered, washed with high-purity distilled water, and dried in a hot air oven at 180 °C for 24 hours to obtain particles of the nickel-based composite hydroxide (Ni_{0.95}Co_{0.04}Mn_{0.01}(OH)₂) with a hollow structure. The obtained nickel-based composite hydroxide particles were in the form of secondary particles formed by agglomerating a plurality of primary particles, where the secondary particles had an average particle diameter (D₅₀) of about 13.2 µm, which was measured through an SEM image.

### (2) Preparation of Positive Electrode Active Material

The prepared nickel-based composite hydroxide particles were mixed with anhydrous lithium hydroxide, alumina (Al₂O₃), and zirconia (ZrO₂). Herein, the anhydrous lithium hydroxide was mixed to have lithium in a mole ratio of 1.05 based on a total mole of metals of the nickel-based composite hydroxide. In addition, Al₂O₃ and ZrO₂ were mixed to have 1 mol% of Al and 0.1 mol% of Zr based on 100 mol% of a total mole of metals of the nickel-based composite hydroxide, Al of Al₂O₃ and Zr of ZrO₂.

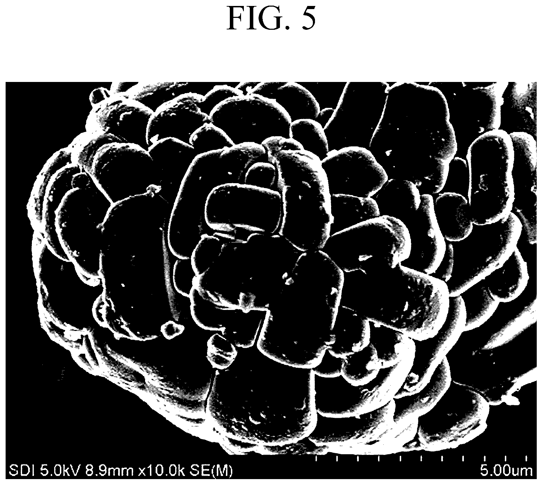

This mixture was heat-treated under an oxygen atmosphere at 810 °C for 8 hours. The heat-treated product was confirmed to have a composition of Li_{1.00}Ni_{0.939}Co_{0.04}Mn_{0.01}Al_{0.01}Zr_{0.001}O₂ in the form of hollow secondary particles. FIG. 5 shows an SEM image of the surface of the secondary particles. When measured through the SEM image, the secondary particles had an average particle diameter (D₅₀) of about 13.5 µm, the primary particles making up the secondary particles had an average particle diameter (D₅₀) of about 2.7 µm, and pores inside the secondary particles had a size of about 4 µm.

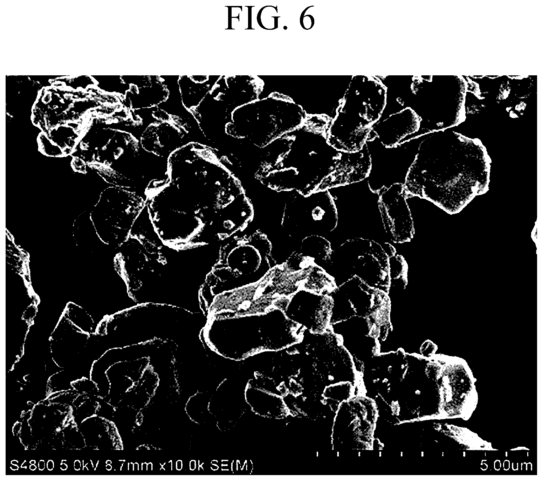

The heat-treated resulting material was pulverized for 20 minutes in a jet mill under an air pressure of about 5 bar to obtain a positive electrode active material in the form of single particles, of which an SEM image is provided in FIG. 6.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminium foil current collector, and then dried and compressed to manufacture a positive electrode. The manufactured positive electrode included the positive electrode active material in the form of pulverized single particles.

A negative electrode active material layer slurry was prepared by mixing 97.5 wt% of graphite negative electrode active material, 1.5 wt% of carboxymethyl cellulose, and 1 wt% of styrene butadiene rubber in a water solvent. The negative electrode active material layer slurry was coated on a copper foil current collector, dried and pressed, thereby manufacturing a negative electrode.

The positive and negative electrodes were utilized with a polytetrafluoroethylene separator and an electrolyte solution prepared by dissolving 1M LiPF₆ in a mixed solvent of ethylene carbonate and dimethyl carbonate in a volume ratio of 3:7 to manufacture a rechargeable lithium battery cell in a general method.

### Example 2

A positive electrode active material and a rechargeable lithium battery cell were manufactured substantially in the same manner as in Example 1, except that the positive electrode active material was prepared by utilizing ZrO₂ to provide 0.2 mol% of Zr based on the 100 mol% of the total mole of the metals of the nickel-based composite hydroxide, e.g., Al of Al₂O₃ and Zr of ZrO₂.

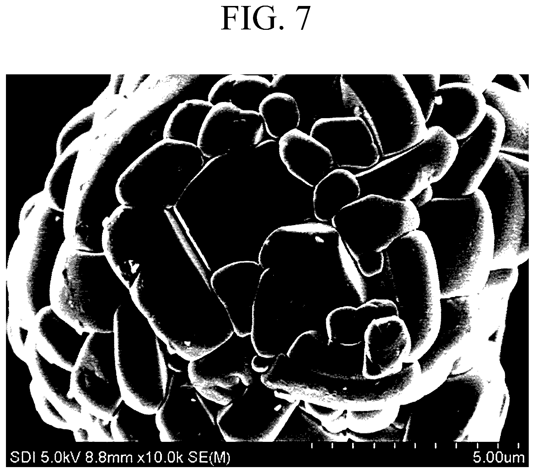

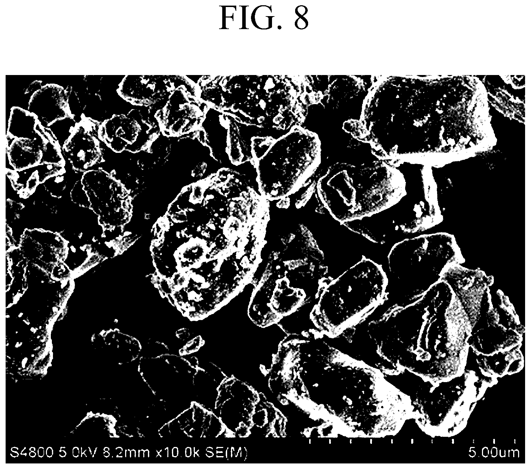

FIG. 7 is an SEM image of the surface of the secondary particles prepared in Example 2; FIG. 8 is an SEM image of the pulverized single particles. When measured using SEM, an average particle diameter (D₅₀) of the secondary particles of Example 2 was about 14 µm, and an average particle diameter (D₅₀) of primary particles making up the secondary particles was about 2.7 µm.

### Comparative Example 1

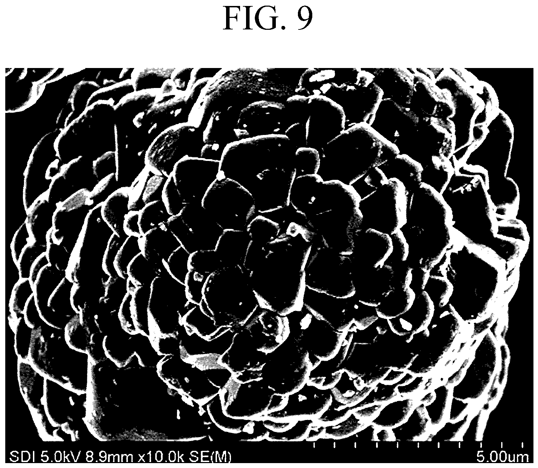

A positive electrode active material and a rechargeable lithium battery cell were manufactured in substantially the same manner as in Example 1, except that the positive electrode active material was prepared without including any ZrO₂ in the mixture. FIG. 9 is an SEM image of the surface of the secondary particles prepared in Comparative Example 1.

As for Comparative Example 1, because primary particles making up the secondary particles were single-crystallized to an insufficient size during the heat treatment step at 810 °C, the secondary particles were not pulverized into single particles through the jet mill process.

Comparing FIG. 9 of Comparative Example 1 with FIG. 5 of Example 1 and FIG. 7 of Example 2, it was confirmed that grain growth, e.g., growth of the primary particles or single crystallization of the primary particles, was promoted by adding Al₂O₃ and ZrO₂ in each set or predetermined content (e.g., amount) for Al and Zr doping under the same heat treatment temperature condition of 810 °C.

### Comparative Example 2

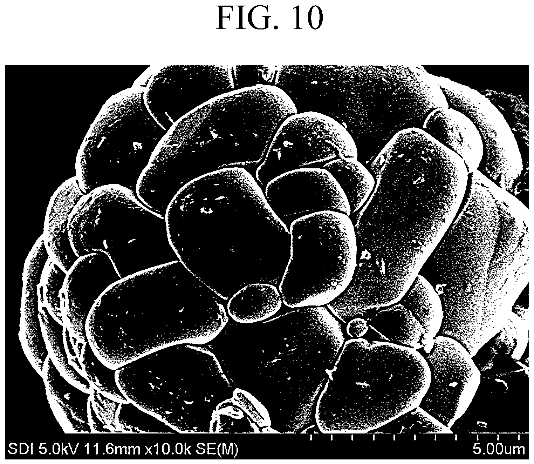

A positive electrode active material and a rechargeable lithium battery cell were manufactured substantially in the same manner as in Example 1 except that the positive electrode active material was prepared by adding ZrO₂ to have 0.3 mol% of Zr based on the 100 mol% of the total mole of the metals of the nickel-based composite hydroxide, e.g., a total mole of Al of Al₂O₃ and Zr of ZrO₂. Comparative Example 2 had an Al/Zr ratio of 3.33, which is less than 5. FIG. 10 is an SEM image of the surface of the secondary particles prepared in Comparative Example 2.

In Comparative Example 2, it was confirmed that as the primary particles overgrew, initial charge and discharge capacity, and efficiency and cycle-life characteristics, decreased.

### Example 3

A positive electrode active material and a rechargeable lithium battery cell were manufactured substantially in the same manner as in Example 1, except that the positive electrode active material was prepared by changing (reducing) the heat treatment temperature from 810 °C to 790 °C.

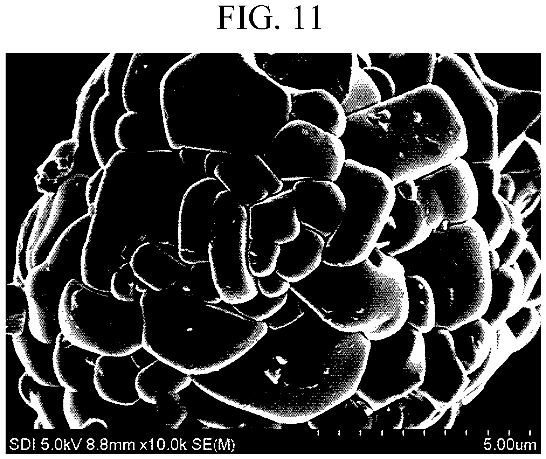

FIG. 11 is an SEM image of the surface of the secondary particles prepared in Example 3. The positive electrode active material in the form of single particles was obtained by pulverizing the secondary particles with a jet mill.

### Example 4

A positive electrode active material and a rechargeable lithium battery cell were manufactured substantially in the same manner as in Example 2, except that the positive electrode active material was prepared by changing (reducing) the heat treatment temperature from 810 °C to 790 °C.

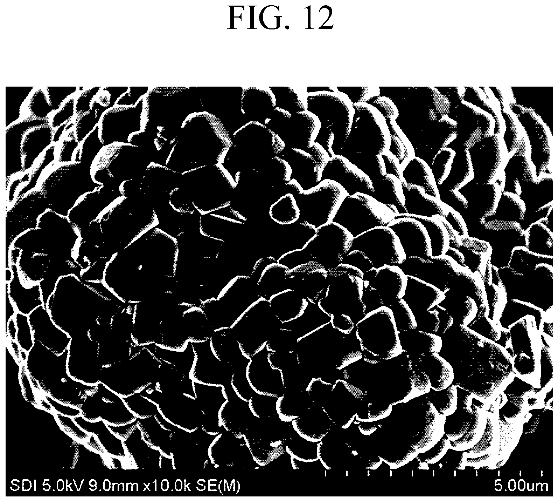

FIG. 12 is an SEM image of the surface of the secondary particles prepared in Example 4. The positive electrode active material in the form of single particles was obtained by pulverizing the secondary particles with a jet mill.

### Comparative Example 3

A positive electrode active material and a rechargeable lithium battery cell were manufactured substantially in the same manner as in Comparative Example 1, except that the positive electrode active material was prepared by changing (reducing) the heat treatment temperature from 810 °C to 790 °C.

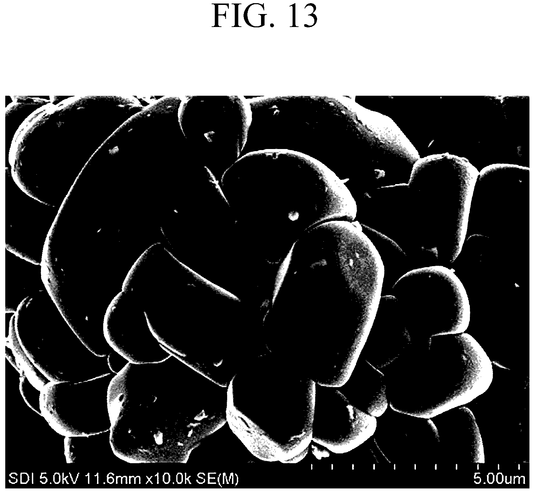

FIG. 13 is an SEM image of the surface of the secondary particles prepared in Comparative Example 3. In Comparative Example 3, the primary particles were single-crystallized to an insufficient size during the heat treatment step at 790 °C; the secondary particles were not pulverized into single particles through the jet mill process.

Comparing FIG. 13 of Comparative Example 3 with FIG. 11 of Example 3 and FIG. 12 of Example 4, it was confirmed that particle growth was promoted by adding Al₂O₃ and ZrO₂ in each set or predetermined content (e.g., amount) for Al and Zr doping under the same heat treatment temperature condition of 790 °C.

### Example 5

A positive electrode active material and a rechargeable lithium battery cell were manufactured substantially in the same manner as in Example 1 except that the positive electrode active material was prepared by changing (increasing) the heat treatment temperature from 810 °C to 890 °C.

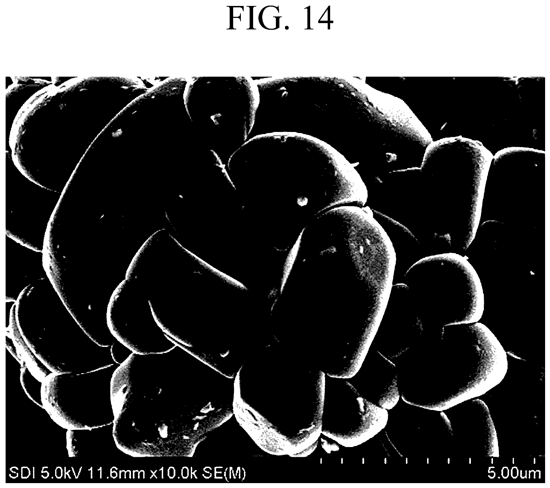

FIG. 14 is an SEM image of the surface of the secondary particles prepared in Example 5. The positive electrode active material in the form of single particles was obtained by pulverizing the secondary particles with a jet mill.

### Example 6

A positive electrode active material and a rechargeable lithium battery cell were manufactured substantially in the same manner as in Example 2, except that the positive electrode active material was prepared by changing (increasing) the heat treatment temperature from 810 °C to 890 °C.

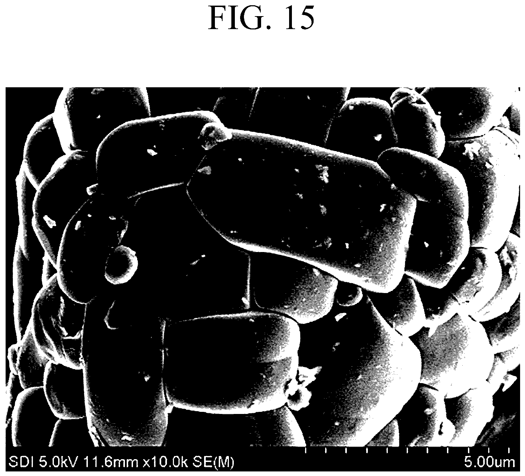

FIG. 15 is an SEM image of the surface of the secondary particles prepared in Example 6. The positive electrode active material in the form of single particles was obtained by pulverizing the secondary particles with a jet mill.

### Comparative Example 4

A positive electrode active material and a rechargeable lithium battery cell were manufactured substantially in the same manner as in Comparative Example 1, except that the positive electrode active material was prepared by changing (increasing) the heat treatment temperature from 810 °C to 890 °C.

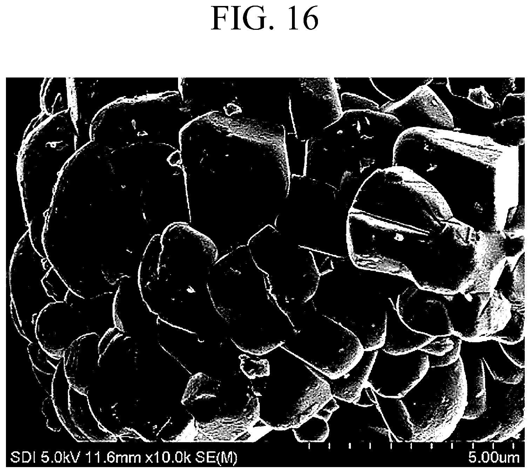

FIG. 16 is an SEM image of the surface of the secondary particles prepared in Comparative Example 4. Even in Comparative Example 4, because the primary particles were single-crystallized to an insufficient size during the heat treatment at 890 °C, the secondary particles were not pulverized through the jet mill process.

Comparing FIG. 16 of Comparative Example 4 with FIG. 14 of Example 5 and FIG. 15 of Example 6, it was confirmed that particle growth was promoted by adding Al₂O₃ and ZrO₂ in each set or predetermined content (e.g., amount) for Al and Zr doping under the same heat treatment temperature condition of 890 °C.

### Evaluation Example 1: Evaluation of Cycle-life Characteristics

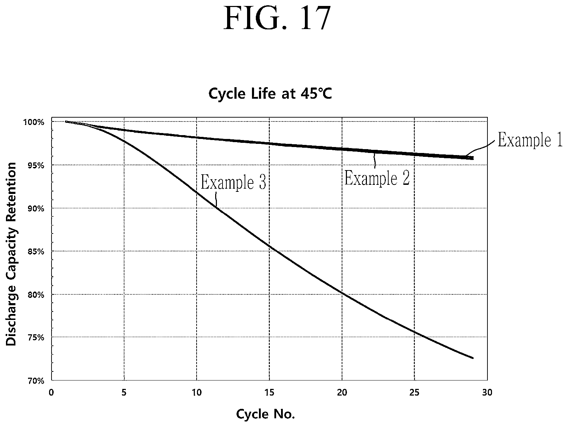

The rechargeable lithium battery cells of Examples 1 and 2 and Comparative Example 1 were charged to 4.45 V at a constant current of 0.2 C and to 0.05 C at the constant voltage and then, discharged to 3.0 V at 0.2 C at 25 °C to proceed with initial charge and discharge. Subsequently, the cells were 30 times charged and discharged at 1.0 C within a voltage range of 3.0 V to 4.45 V 45 °C. Thereafter, a ratio of discharge capacity at each cycle to the initial discharge capacity was provided in FIG. 17. Referring to FIG. 17, Comparative Example 1, whose positive electrode active material was not single-crystallized, exhibited sharply dropped capacity retention as the cycles proceeded. In contrast, each of Examples 1 and 2 achieved excellent or suitable cycle-life characteristics.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any subrange subsumed within the ranges expressly recited herein.

A device of preparing a positive electrode active material, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described in connection with what is presently considered to be practical example embodiments, it is to be understood that present disclosure is not limited to the disclosed embodiments. In contrast, it is intended to cover one or more suitable modifications and equivalent arrangements included within the scope of the appended claims and equivalents thereof.

Embodiments are set out in the following clauses.

Clause 1. A positive electrode active material, comprising:
a layered lithium nickel-based composite oxide, wherein, a nickel content is greater than or equal to 60 mol% based on 100 mol% of a total mole of metals of the layered lithium nickel-based composite oxide excluding lithium, an aluminium content is 0.8 mol% to 1.5 mol% based on the 100 mol% of the total mole of the metals of the layered lithium nickel-based composite oxide excluding lithium, and a zirconium content is 0.1 mol% to 0.3 mol% based on the 100 mol% of the total mole of the metals of the layered lithium nickel-based composite oxide excluding lithium,
wherein, a ratio of the aluminium content relative to the zirconium content (Al/Zr) is greater than or equal to 5, and
wherein, the positive electrode active material is in a form of a single particle with an average particle diameter (D₅₀) of 1 µm to 4 µm.

Clause 2. The positive electrode active material of Clause 1, wherein: the positive electrode active material is in a form of one single particle separated from another single particle or two to nine single particles attached with each other.

Clause 3. The positive electrode active material of Clause 1 or Clause 2, wherein: the layered lithium nickel-based composite oxide is represented by Chemical Formula 1:

[Chemical Formula 1] Liₐ₁Niₓ₁M¹_{y1}Al_{z1}Zr_{w1}O_{2-b1}X_{b1}

in Chemical Formula 1, 0.9≤a1≤1.2, 0.6≤x1≤0.991, 0≤y1≤0.391, 0.008≤z1≤0.015, 0.001≤w1≤0.003, 0.9≤x1+y1+z1+w1≤1.1, and 0≤b1≤0.1, M¹ being one or more elements selected from among B, Ba, Ca, Ce, Co, Cr, Cu, Fe, Mg, Mn, Mo, Nb, Si, Sn, Sr, Ti, V, W, and Zn, and X being one or more elements selected from among F, P, and S.

Clause 4. A positive electrode, comprising: a positive electrode current collector, and a positive electrode active material layer located on the positive electrode current collector and comprising the positive electrode active material of any one of Clauses 1 to 3.

Clause 5. The positive electrode of Clause 4, wherein the positive electrode active material layer comprises: a first positive electrode active material comprising the positive electrode active material of any one of Clauses 1 to 3, and a second positive electrode active material in a form of secondary particles,
wherein each of the secondary particles comprises an agglomeration of a plurality of primary particles,
wherein the second positive electrode active material comprises a layered lithium nickel-based composite oxide,
wherein, a nickel content is greater than or equal to 60 mol% based on 100 mol% of a total mole of metals of the layered lithium nickel-based composite oxide excluding lithium, an aluminium content is 0.8 mol% to 1.5 mol% based on the 100 mol% of the total mole of the metals of the layered lithium nickel-based composite oxide excluding lithium, and a zirconium content is 0.1 mol% to 0.3 mol% based on the 100 mol% of the total mole of the metals of the layered lithium nickel-based composite oxide excluding lithium,
wherein, a ratio of the aluminium content relative to the zirconium content (Al/Zr) is greater than or equal to 5, and
wherein, the secondary particles have a hollow structure with pores inside, and an average particle diameter (D₅₀) of the primary particles constituting the secondary particles is 1 µm to 4 µm.

Clause 6. The positive electrode of Clause 5, wherein: the layered lithium nickel-based composite oxide of the second positive electrode active material is represented by Chemical Formula 1:

[Chemical Formula 1] Liₐ₁Niₓ₁M¹_{y1}Al_{z1}Zr_{w1}O_{2-b1}X_{b1}

in Chemical Formula 1, 0.9≤a1≤1.2, 0.6≤x1≤0.991, 0≤y1≤0.391, 0.008≤z1≤0.015, 0.001≤w1≤0.003, 0.9≤x1+y1+z1+w1≤1.1, and 0≤b1≤0.1, M¹ being one or more elements selected from among B, Ba, Ca, Ce, Co, Cr, Cu, Fe, Mg, Mn, Mo, Nb, Si, Sn, Sr, Ti, V, W, and Zn, and X being one or more elements selected from among F, P, and S.

Clause 7. The positive electrode of Clause 5 or Clause 6, wherein: an average particle diameter (D₅₀) of the secondary particles of the second positive electrode active material is 10 µm to 20 µm.

Clause 8. The positive electrode of any of Clauses 5 to 7, wherein: a size of the pores inside the secondary particles of the second positive electrode active material is 1 µm to 9 µm.

Clause 9. The positive electrode of any of Clauses 5 to 8, wherein: based on 100 wt% of a total weight of the first positive electrode active material and the second positive electrode active material, the first positive electrode active material is included at 5 wt% to 60 wt%, and the second positive electrode active material is included at 40 wt% to 95 wt%.

Clause 10. A method comprising:
performing a co-precipitation reaction of a nickel precursor and an M¹ precursor to prepare a nickel-based composite hydroxide being in a form of particles and having micropores inside the particles,
mixing the nickel-based composite hydroxide, a lithium raw material, an aluminium raw material, and a zirconium raw material and performing a heat treatment to prepare hollow secondary particles comprising layered lithium nickel-based composite oxide and having pores inside as secondary particles made by agglomerating a plurality of primary particles,
pulverizing the secondary particles, and
obtaining a positive electrode active material,
wherein M¹ is one or more elements selected from among B, Ba, Ca, Ce, Co, Cr, Cu, Fe, Mg, Mn, Mo, Nb, Si, Sn, Sr, Ti, V, W, and Zn, and
based on 100 mol% of a total mole of metals of the nickel-based composite hydroxide, an aluminium content of the aluminium raw material is 0.8 mol% to 1.5 mol%, a zirconium content of the zirconium raw material is 0.1 mol% to 0.3 mol%, and a ratio of the aluminium content relative to the zirconium content (Al/Zr) is greater than or equal to 5, and
wherein the method is a method of preparing a positive electrode active material.

Clause 11. The method of Clause 10, wherein: the co-precipitation reaction comprises a first reacting at a pH range of 11 to 12, and a second reacting at a pH lower than the first reacting.

Clause 12. The method of Clause 10 or Clause 11, wherein: the nickel-based composite hydroxide is represented by Chemical Formula 11:

[Chemical Formula 11] Niₓ₁₁M¹_{y11}(OH)₂

in Chemical Formula 11, 0.6≤x11≤1, 0≤y11≤0.4, and 0.9≤x11+y11≤1.1, and M¹ being one or more elements selected from among B, Ba, Ca, Ce, Co, Cr, Cu, Fe, Mg, Mn, Mo, Nb, Si, Sn, Sr, Ti, V, W, and Zn.

Clause 13. The method of any of Clauses 10 to 12, wherein: the nickel-based composite hydroxide is amorphous, and the nickel-based composite hydroxide is in a form of a particle, and the particle comprises an inner portion comprising a plurality of microporesand an outer portion that surrounds the inner portion and has a dense structure.

Clause 14. The method of any of Clauses 10 to 13, wherein: a lithium content of the lithium raw material is 0.9 parts by mole to 1.2 parts by mole based on the total of 1 part by mole of the total metal of the nickel-based composite hydroxide, aluminium of the aluminium raw material, and zirconium of the zirconium raw material.

Clause 15. The method of any of Clauses 10 to 14, wherein: the aluminium raw material is aluminium oxide, and the zirconium raw material is zirconium oxide.

Clause 16. The method of any of Clauses 10 to 15, wherein: the heat treatment is performed at 700 °C to 900 °C in an oxidizing gas atmosphere.

Clause 17. The method of any of Clauses 10 to 16, wherein: in the mixing of the nickel-based composite hydroxide, the lithium raw material, the aluminium raw material, and the zirconium raw material and the performing of the heat treatment, an alkaline grain growth accelerator is not added.

Clause 18. The method of any of Clauses 10 to 17, wherein: the layered lithium nickel-based composite oxide is represented by Chemical Formula 1:

[Chemical Formula 1] Liₐ₁Niₓ₁M¹_{y1}Al_{z1}Zr_{w1}O_{2-b1}X_{b1}

in Chemical Formula 1, 0.9≤a1≤1.2, 0.6≤x1≤0.991, 0≤y1≤0.391, 0.008≤z1≤0.015, 0.001≤w1≤0.003, 0.9≤x1+y1+z1+w1≤1.1, and 0≤b1≤0.1, M¹ being one or more elements selected from among B, Ba, Ca, Ce, Co, Cr, Cu, Fe, Mg, Mn, Mo, Nb, Si, Sn, Sr, Ti, V, W, and Zn, and X being one or more elements selected from among F, P, and S.

Clause 19. The method of any of Clauses 10 to 18, wherein: an average particle diameter (D₅₀) of the secondary particles is 10 µm to 20 µm, and an average particle diameter (D₅₀) of the primary particles constituting the secondary particles is 1 µm to 4 µm, and a size of the pores inside the secondary particles is 1 µm to 9 µm.

Clause 20. The method of any of Clauses 10 to 19, wherein: the pulverizing of the secondary particles is performed utilizing a jet mill or air flow classifying mill equipment, and is performed for 10 to 120 minutes.

Clause 21. The method of any of Clauses 10 to 20, wherein the method comprises: performing a reheat treatment after the pulverizing of the secondary particles, wherein the reheat treatment is performed in an oxidizing gas atmosphere at 500 °C to 900 °C.

Clause 22. The method of any of Clauses 10 to 21, wherein the method comprises: mixing the pulverized secondary particles with a coating raw material, performing a reheat treatment after the pulverizing of the secondary particles mixed with the coating raw material, wherein the reheat treatment is performed in an oxidizing gas atmosphere at 500 °C to 900 °C.

Clause 23. The method of Clause 22, wherein: the coating raw material is a raw material of one or more elements selected from among Al, B, Co, Mg, V, Zn, and Zr.

Clause 24. The method of any of Clauses 10 to 23, wherein: the obtained positive electrode active material comprises single particles having an average particle diameter (D₅₀) of 1 µm to 4 µm.

Clause 25. The method of any of Clauses 10 to 24, wherein the obtained positive electrode active material comprises: a first positive electrode active material in a form of a single particle having an average particle diameter (D₅₀) of 1 µm to 4 µm, and a second positive electrode active material in a form of secondary particles each made by agglomerating a plurality of primary particles, wherein an average particle diameter (D₅₀) of the secondary particles of the second positive electrode active material is 10 µm to 20 µm, and an average particle diameter (D₅₀) of the primary particles constituting the secondary particles is 1 µm to 4 µm.

Clause 26. A rechargeable lithium battery, comprising: the positive electrode of any of Clauses 4 to 9, a negative electrode, and an electrolyte.

**Reference Numerals**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
a layered lithium nickel-based composite oxide,
wherein,
a nickel content is greater than or equal to 60 mol% based on 100 mol% of a total mole of metals of the layered lithium nickel-based composite oxide excluding lithium,
an aluminium content is 0.8 mol% to 1.5 mol% based on the 100 mol% of the total mole of the metals of the layered lithium nickel-based composite oxide excluding lithium, and
a zirconium content is 0.1 mol% to 0.3 mol% based on the 100 mol% of the total mole of the metals of the layered lithium nickel-based composite oxide excluding lithium,
wherein,
a ratio of the aluminium content relative to the zirconium content (Al/Zr) is greater than or equal to 5, and
wherein,
the positive electrode active material is in a form of a single particle with an average particle diameter (D₅₀) of 1 µm to 4 µm.

2. The positive electrode active material as claimed in claim 1, wherein: the positive electrode active material is in a form of one single particle separated from another single particle, or in a form of an agglomeration of from two to nine single particles.

3. The positive electrode active material as claimed in claim 1 or claim 2, wherein:
the layered lithium nickel-based composite oxide is represented by Chemical Formula 1:
[Chemical Formula 1] Liₐ₁Niₓ₁M¹_{y1}Al_{z1}Zr_{w1}O_{2-b1}X_{b1}
wherein, in Chemical Formula 1, 0.9≤a1 ≤1.2, 0.6≤x1≤0.991, 0≤y1≤0.391, 0.008≤z1≤0.015, 0.001≤w1≤0.003, 0.9≤x1+y1+z1+w1≤1.1, and 0≤b1≤0.1, M¹ being one or more elements selected from among B, Ba, Ca, Ce, Co, Cr, Cu, Fe, Mg, Mn, Mo, Nb, Si, Sn, Sr, Ti, V, W, and Zn, and X being one or more elements selected from among F, P, and S.

4. A positive electrode, comprising:
a positive electrode current collector, and
a positive electrode active material layer located on the positive electrode current collector and comprising the positive electrode active material as claimed in any one of claims 1 to 3.

5. The positive electrode as claimed in claim 4, wherein the positive electrode active material layer comprises:
a first positive electrode active material comprising the positive electrode active material as claimed in any one of claims 1 to 3, and
a second positive electrode active material in a form of secondary particles, wherein each of the secondary particles comprises an agglomeration of a plurality of primary particles,
wherein the second positive electrode active material comprises a layered lithium nickel-based composite oxide,
wherein,
a nickel content is greater than or equal to 60 mol% based on 100 mol% of a total mole of metals of the layered lithium nickel-based composite oxide excluding lithium,
an aluminium content is 0.8 mol% to 1.5 mol% based on the 100 mol% of the total mole of the metals of the layered lithium nickel-based composite oxide excluding lithium, and
a zirconium content is 0.1 mol% to 0.3 mol% based on the 100 mol% of the total mole of the metals of the layered lithium nickel-based composite oxide excluding lithium,
wherein,
a ratio of the aluminium content relative to the zirconium content (Al/Zr) is greater than or equal to 5, and
wherein,
the secondary particles have a hollow structure with pores inside, and an average particle diameter (D₅₀) of the primary particles constituting the secondary particles is 1 µm to 4 µm.

6. The positive electrode as claimed in claim 5, wherein:
the layered lithium nickel-based composite oxide of the second positive electrode active material is represented by Chemical Formula 1:
[Chemical Formula 1] Liₐ₁Niₓ₁M¹_{y1}Al_{z1}Zr_{w1}O_{2-b1}X_{b1}
wherein, in Chemical Formula 1, 0.9≤a1 ≤1.2, 0.6≤x1≤0.991, 0≤y1≤0.391, 0.008≤z1≤0.015, 0.001≤w1≤0.003, 0.9≤x1+y1+z1+w1≤1.1, and 0≤b1≤0.1, M¹ being one or more elements selected from among B, Ba, Ca, Ce, Co, Cr, Cu, Fe, Mg, Mn, Mo, Nb, Si, Sn, Sr, Ti, V, W, and Zn, and X being one or more elements selected from among F, P, and S.

7. The positive electrode as claimed in claim 5 or claim 6, wherein:
(a) an average particle diameter (D₅₀) of the secondary particles of the second positive electrode active material is 10 µm to 20 µm, optionally wherein:
a size of the pores inside the secondary particles of the second positive electrode active material is 1 µm to 9 µm; and/or(b) based on 100 wt% of a total weight of the first positive electrode active material and the second positive electrode active material, the first positive electrode active material is included at 5 wt% to 60 wt%, and the second positive electrode active material is included at 40 wt% to 95 wt%.

8. A method of preparing a positive electrode active material, comprising
performing a co-precipitation reaction of a nickel precursor and an M¹ precursor to prepare a nickel-based composite hydroxide being in a form of particles and having micropores inside the particles,
mixing the nickel-based composite hydroxide, a lithium raw material, an aluminium raw material, and a zirconium raw material and performing a heat treatment to prepare hollow secondary particles comprising layered lithium nickel-based composite oxide and having pores inside as secondary particles made by agglomerating a plurality of primary particles,
pulverizing the secondary particles, and
obtaining a positive electrode active material,
wherein M¹ is one or more elements selected from among B, Ba, Ca, Ce, Co, Cr, Cu, Fe, Mg, Mn, Mo, Nb, Si, Sn, Sr, Ti, V, W, and Zn, and
based on 100 mol% of a total mole of metals of the nickel-based composite hydroxide, aluminum in the aluminum raw material, and zirconium in the zirconium raw material, an aluminium content of the aluminium raw material is 0.8 mol% to 1.5 mol%, a zirconium content of the zirconium raw material is 0.1 mol% to 0.3 mol%, and a ratio of the aluminium content relative to the zirconium content (Al/Zr) is greater than or equal to 5.

9. The method as claimed in claim 8, wherein:
(a) the co-precipitation reaction comprises a first stage reacting at a pH range of 11 to 12, and a second stage reacting at a pH lower than the first stage.

10. The method as claimed in claim 8 or claim 9, wherein:
(a) the nickel-based composite hydroxide is represented by Chemical Formula 11:
[Chemical Formula 11] Niₓ₁₁M¹_{y11}(OH)₂
wherein, in Chemical Formula 11, 0.6≤x11≤1, 0≤y11≤0.4, and 0.9≤x11+y11≤ 1.1, and M¹ being one or more elements selected from among B, Ba, Ca, Ce, Co, Cr, Cu, Fe, Mg, Mn, Mo, Nb, Si, Sn, Sr, Ti, V, W, and Zn; and/or
(b) the nickel-based composite hydroxide is amorphous, and
the nickel-based composite hydroxide is in a form of a particle, and the particle comprises an inner portion comprising a plurality of micropores and an outer portion that surrounds the inner portion and has a dense structure; and/or
(c) a lithium content of the lithium raw material is 0.9 parts by mole to 1.2 parts by mole based on the total metals of 1 part by mole ofmetals of the nickel-based composite hydroxide, aluminium of the aluminium raw material, and zirconium of the zirconium raw material; and/or
(d) the aluminium raw material is aluminium oxide, and
the zirconium raw material is zirconium oxide.

11. The method as claimed in any one of claims 8 to 10, wherein:
(a) the heat treatment step is performed at 700 °C to 900 °C in an oxidizing gas atmosphere; and/or
(b) in the step of mixing of the nickel-based composite hydroxide, the lithium raw material, the aluminium raw material, and the zirconium raw material, and the step of performing of the heat treatment, an alkaline grain growth accelerator is not added; and/or
(c) the layered lithium nickel-based composite oxide is represented by Chemical Formula 1:
[Chemical Formula 1] Liₐ₁Niₓ₁M¹_{y1}Al_{z1}Zr_{w1}O_{2-b1}X_{b1}
wherein, in Chemical Formula 1, 0.9≤a1≤1.2, 0.6≤x1≤0.991, 0≤y1≤0.391, 0.008≤z1≤0.015, 0.001≤w1≤0.003, 0.9≤x1+y1+z1+w1≤1.1, and 0≤b1≤0.1, M¹ being one or more elements selected from among B, Ba, Ca, Ce, Co, Cr, Cu, Fe, Mg, Mn, Mo, Nb, Si, Sn, Sr, Ti, V, W, and Zn, and X being one or more elements selected from among F, P, and S; and/or
(d) an average particle diameter (D₅₀) of the secondary particles is 10 µm to 20 µm, and
an average particle diameter (D₅₀) of the primary particles constituting the secondary particles is 1 µm to 4 µm, and
a size of the pores inside the secondary particles is 1 µm to 9 µm.

12. The method as claimed in any one of claims 8 to 11, wherein:
(a) the step of pulverizing of the secondary particles is performed utilizing a jet mill or air flow classifying mill equipment, and is performed for 10 to 120 minutes; and/or
(b) the method further comprises performing a reheat treatment step after the step of pulverizing of the secondary particles, wherein the reheat treatment is performed in an oxidizing gas atmosphere at 500 °C to 900 °C; and/or
(c) the method further comprises the steps of
(i) mixing the pulverized secondary particles with a coating raw material, and
(ii) performing a reheat treatment after the step of mixing the pulverized secondary particles with the coating raw material, wherein the reheat treatment step is performed in an oxidizing gas atmosphere at 500 °C to 900 °C,
optionally wherein
the coating raw material is a raw material of one or more elements selected from among Al, B, Co, Mg, V, Zn, and Zr.

13. The method as claimed in any one of claims 8 to 12, wherein:
the obtained positive electrode active material comprises single particles having an average particle diameter (D₅₀) of 1 µm to 4 µm.

14. The method as claimed in any one of claims 8 to 13, wherein the obtained positive electrode active material comprises:
a first positive electrode active material in a form of a single particle having an average particle diameter (D₅₀) of 1 µm to 4 µm, and
a second positive electrode active material in a form of secondary particles each made by agglomerating a plurality of primary particles,
wherein an average particle diameter (D₅₀) of the secondary particles of the second positive electrode active material is 10 µm to 20 µm, and an average particle diameter (D₅₀) of the primary particles constituting the secondary particles is 1 µm to 4 µm.

15. A rechargeable lithium battery, comprising:
a positive electrode as claimed in any one of claims 4 to 7,
a negative electrode, and
an electrolyte.
